# EUROPÄISCHE PATENTSCHRIFT

(11) **EP 2 331 836 B1**
(45) Veröffentlichungstag und Bekanntmachung des Hinweises auf die Patenterteilung: **08.02.2012**
(21) Anmeldenummer: 09740247.3
(22) Anmeldetag: 29.07.2009
(51) Int. Cl.: F16D 3/38, F16D 3/41

(54) **KREUZGELENK, INSBESONDERE FÜR EINE LENKSÄULE FÜR EIN KRAFTFAHRZEUG**
UNIVERSAL JOINT, PARTICULARLY FOR A STEERING COLUMN FOR A MOTOR VEHICLE
JOINT DE CARDAN, EN PARTICULIER POUR UNE COLONNE DE DIRECTION D UN VÉHICULE AUTOMOBILE

(30) Priorität: 07.08.2008 DE 102008036753
(43) Veröffentlichungstag der Anmeldung: 15.06.2011
(73) Patentinhaber: ThyssenKrupp Presta Aktiengesellschaft, 9492 Eschen (LI)
(72) Erfinder: LUTZ, Christian, A-6714 Nüziders (AT)
(74) Vertreter: Hofmann, Ralf U.
(86) Internationale Anmeldenummer: PCT/AT2009/000292
(87) Internationale Veröffentlichungsnummer: WO 2010/015007

(56) Entgegenhaltungen:
- DE-A1-102005 019 692
- DE-U- 1 827 229
- JP-A- 9 196 082
- JP-A- 2007 078 136

## Beschreibung

Die Erfindung bezieht sich auf ein Kreuzgelenk, insbesondere für eine Lenksäule für ein Kraftfahrzeug, umfassend erste und zweite Gelenkgabeln, welche jeweils zwei voneinander beabstandete Arme aufweisen, ein Gelenkkreuz mit Gelenkzapfen, die gegenüber der jeweiligen Gelenkgabel drehbar gelagert sind, und Büchsen, die jeweils einen Mantel und einen die Büchse in axialer Richtung verschließenden Boden aufweisen und in die jeweils einer der Gelenkzapfen ragt und die jeweils in einer Durchtrittsöffnung gehalten sind, die in einem der Arme einer der Gelenkgabeln angeordnet ist und von einer Mantelfläche begrenzt ist, wobei die Lagerung der Gelenkzapfen in den Büchsen jeweils ein Schrägkugellager, dessen Kugeln an einer an der Büchse angeordneten ersten Laufbahn und einer am Gelenkzapfen angeordneten ersten Laufbahn abrollen, und ein Radiallager umfasst, für dessen Wälzkörper eine an der Büchse angeordnete zweite Laufbahn und eine am Gelenkzapfen angeordnete zweite Laufbahn vorgesehen ist.

Kreuzgelenke für Lenksäulen von Kraftfahrzeugen sind in unterschiedlichen Ausführungsformen bekannt geworden. Solche Kreuzgelenke, auch Kardangelenke oder Universalgelenke genannt, dienen in Lenksäulen von Kraftfahrzeugen zur gelenkigen Verbindung von Teilabschnitten der Lenkwelle. So ist beispielsweise aus der DE 1 941 975 A ein Kreuzgelenk für eine Lenksäule eines Kraftfahrzeuges bekannt geworden, bei dem die Kreuzgelenkzapfen stirnseitig mit sacklochartigen Ausnehmungen versehen sind, in denen elastische Puffer angeordnet sind. Diese stützen sich an den Böden der sie aufnehmenden Büchsen axial ab. Erst bei größeren Axialkräften stützen sich die Stirnflächen der Gelenkzapfen direkt gegen die Böden der Büchsen ab. Zur radialen Lagerung der Gelenkzapfen ist jeweils ein Nadellager vorgesehen, dessen Nadeln zwischen den Gelenkzapfen und den Büchsen abrollen, die in Durchtrittsöffnungen in den Armen der Gelenkgabeln festgelegt sind.

Auch Lenksäulen, bei denen von einem, beispielsweise elektrischen, Hilfsantrieb ein Drehmoment auf die Lenkwelle ausübbar ist, umfassen Wellenteile der Lenkwelle verbindende Kreuzgelenke, über die das vom Hilfsantrieb ausgeübte Drehmoment zu übertragen ist. Das vom Hilfsantrieb ausgeübte Drehmoment kann hierbei relativ hohe Werte annehmen, beispielsweise bis 120 Nm, welche die im Normalbetrieb manuell vom Lenker auf die Lenkwelle aufgebrachten Drehmomente, beilspielsweise im Bereich bis 10 Nm, weit übersteigen können. Solche Hilfsantriebe dienen zur Verringerung der vom Lenker aufzubringenden Lenkkraft (=Lsnksäulen mit Hilfskraftunterstützung bzw. Servolenkung) und/oder als Einrichtungen zur Drehzahlüberiagerung der vom Lenker aufgebrachten Lenkbewegung und/oder als Einrichtung zur selbsttätigen Lenkung durch den Hilfsantrieb. Beispielsweise sind solche Lenksäule aus der EP 1 876 084 A1, US 4,890,683 A, EP 1447 305 B1, DE 10 2005 015 451 A1 oder DE 103 42 681 B3 bekannt.

Aus der JP 2007 078 136 A ist ein Kreuzgelenk bekannt, bei dem die Radiallager für die Gelenkzapfen zusätzlich zu den Nadeln einen Kranz von zwischen den Gelenkzapfen und der Büchse abrollenden Kugeln ausweisen. Bei niedrigen über das Kreuzgeienlk zu übertragenden Drehmomenten werden die Kräfte über die Kugeln und bei höheren Drehmomenten zusätzlich über die Nadeln übertragen.

Aus der DE 2 750 854 A1 ist weiters ein Kreuzgelenk bekannt, bei dem die Laufbahnen für die die Gelenkzapfen drehbar lagernden Wälzkörper gegenüber den Längsachsen der Wälzkörper zur Aufnahme von Axialkräften geneigt sind. In einer Ausführungsform sind hierbei als Wälzkörper Kugeln beschrieben, die einerseits in einer teilweise kugelförmigen Laufbahn, andererseits an einer kegelstumpfförmigen Laufbahn abrollen.

Ein Kreuzgelenk der eingangs genannten Art und entsprechend dem Oberbegriff des Anspruchs 1 ist aus der DE 10 2005 019 692 A1 bekannt. Zur Ausbildung eines Radiallagers für einen jeweiligen Gelenkzapfen dient ein Nadelkranz aus zwischen dem Gelenkzapfen und der Büchse abrollenden Nadeln. Zusätzlich umfasst die Lagerung des Gelenkzapfens in der Büchse ein als Schrägkugellager ausgebildetes Axiallager, über welches sich der Gelenkzapfen stirnseitig an dem Boden der Büchse abstützt sowie axial geführt und zentriert ist. Nachteilig ist, dass die vom Schrägkugellager aufnehmbaren Belastungen relativ gering sind, so dass bereits bei relativ niedrigen, auf das Kreuzgelenk einwirkenden Drehmomenten die Übertragung der Lasten über die Nadeln erfolgt.

Ein Einsatz sowohl eines Nadellagers als Radiallager als auch eines Kugellagers als Axiallager geht auch aus der JP 09 196 082 A als auch aus der GB 891479 B hervor. Bei der erstgenannten Schrift wirkt das Kugellager in radialer Richtung nicht, bei der zweitgenannten Schrift nur bis zu relativ geringen Kräften.

Aus der DE 2 219 809 A geht eine aufwendige Ausbildung eines Kreuzgelenkes hervor, bei der das Gelenkkreuz gegenüber den Gelenkgabeln über mehrere Kränze von Kugellagern gelagert ist, wobei die Kugeln zwischen einem kugelschalenförmigen und einem hohlkugelschalenförmigen Teil abrollen.

Die DE 32 11612 A1 beschreibt eine relativ aufwendige Ausbildung eines Kreuzgelenkes, wobei das Gelenkkreuz über diabolo- oder tonnenförmige Rollen drehbar gelagert ist, deren Längsachsen winkelig zur jeweiligen Längsachse des Gelenkkreuzes liegen.

Aus der DE 1 827 229 U geht ein Kreuzgelenk hervor, das mit einem Pendelnadellager ausgebildet ist, wobei die in einem Käfig drehbar gelagerten Nadeln von einem Laufring umgeben werden, dessen Außenfläche ballig ausgebildet ist. Dieser Laufring ist in einem diesen umgebenden, entsprechend geformten weiteren Ring gelagert. Gemäß einer der offenbarten Ausführungsformen ist an der Stirnfläche des die ballige Außenfläche aufweisenden Laufrings ein elastisches Glied vorgesehen, welches sich gegen den Boden der Büchse abstützt. Weiters ist am äußersten Ende des Gelenkszapfens ein Schrägkugellager vorgesehen, welches den Gelenkszapfen gegenüber dem die ballige Außenfläche aufweisenden Laufring lagert.

Aufgabe der Erfindung ist es, ein Kreuzgelenk der eingangs genannten Art bereitzustellen, bei welchem eine verbesserte Übertragung der Kräfte erreicht wird. Erfindungsgemäß gelingt dies durch ein Kreuzgelenk mit den Merkmalen des Anspruchs 1.

Durch die erfindungsgemäße Ausbildung, bei der der Abstand einer jeweiligen Kugel des Schrägkugellagers von der Mantelfläche der Durchtrittsöffnung des Armes, in der die jeweilige Büchse gehalten ist, kleiner als der Durchmesser der Kugel ist, können von den Kugeln des Schrägkugellagers relativ hohe Kräfte übertragen werden. Vorteilhafterweise können bei einem erfindungsgemäßen Kreuzgelenk die auftretenden Kräfte zumindest bis zu einem Drehmoment, welches zwischen den mit dem Kreuzgelenk verbundenen Wellen wirkt, von zumindest 15 Nm, vorzugsweise zumindest 20 Nm, nur von den Schrägkugellagern übertragen werden, d. h. die Radiallager sind bis zu diesem Drehmoment lastfrei. Erst bei höheren einwirkenden Drehmomenten werden die auftretenden Kräfte auch über die Radiallager übertragen.

Erfindungsgemäß rollen die Kugeln des Schrägkugellagers an einer ersten Laufbahn der Büchse ab, die eine zur zentralen Längsachse des Gelenkszapfens gerichtete Innenfläche des Mantels mit einer zum Zentrum des Gelenkkreuzes gerichteten Innenfläche des Bodens verbindet.

Durch die Erfindung kann ein Kreuzgelenk mit ausgezeichneten Laufeigenschaften und einer sehr hohen Belastbarkeit bereitgestellt werden. Bei einwirkenden Drehmomenten, die nur von den Kugeln der Schrägkugellager übertragen werden, wird die Reibung gegenüber herkömmlichen Kreuzgelenken, welche nur Nadellager aufweisen, verringert. Somit wird ein verringertes Beugemoment des Kreuzgelenks erreicht. Auch die Geräuschentwicklung kann verringert werden. Bei Lastwechseln durch Drehrichtungswechsel, bei denen die auftretenden Kräfte größer als diejenigen sind, die von den Schrägkugellagern allein übertragen werden, werden durch die Schrägkugellager Belastungsspitzen (Schläge), die auf die Wälzkörper der Radiallager einwirken, zumindest verringert.

Die Kugeln des Schrägkugellagers sind vorteilhafterweise zwischen ihren Laufbahnen an der Büchse und am Gelenkzapfen federelastisch vorgespannt und zentrieren diesen. Diese Vorspannung kann beispielsweise durch eine elastische Aufbiegung der Arme einer jeweiligen Gelenkgabel erreicht werden. Es werden dadurch von den Armen die in den Durchtrittsöffnungen der Arme festgelegten Büchsen, in welche gegenüberliegende Zapfen des Gelenkkreuzes ragen in Richtung zueinander beaufschlagt. Zusätzlich oder stattdessen ist es denkbar und möglich, separate Federelemente vorzusehen, die sich jeweils am Boden einer Büchse abstützen und die Kugeln in axialer Richtung des jeweiligen Gelenkzapfens im Sinne einer Annäherung an das Zentrum des Gelenkkreuzes beaufschlagen.

Ein in erfindungsgemäßer Weise ausgebildetes Kreuzgelenk kann vorteilhafterweise ohne spürbares Spiel bei der Übertragung eines Drehmoments zwischen einer Eingangs- und einer Ausgangswelle ausgebildet werden und verbessert dadurch den Lenkkomfort. Bei geringen übertragenen Drehmomenten, z.B. zumindest unterhalb von 10Nm, kann das tatsächlich auftretende Spiel annähernd Null sein. Gegenüber herkömmlichen Kreuzgelenken, die nur Radial-Nadellager aufweisen, entfällt das bei einem Drehmoment im Drehrichtungswechsel hervorgerufene Radialspiel aufgrund der Toleranzen im Büchsendurchmesser, Nadeldurchmesser und Zapfendurchmesser sowie dem Mindest-Laufspalt.

Wenn eine durch das einwirkende Drehmoment hervorgerufene, auf die Kugeln wirkende Kraft die auf die Kugeln einwirkende Vorspannung übersteigt, so beginnen sich die Gelenkzapfen gegenüber den Längsachsen der Büchsen radial zu verschieben bzw. zu verschwenken. Diese Bewegung wird durch die Radiallager begrenzt, wobei das maximale Spiel des Kreuzgelenks begrenzt wird. Die Büchsen drücken dabei die Arme der Gelenkgabeln radial auf. Wenn das Drehmoment nachlässt, nehmen die Arme und Büchsen die ursprüngliche axiale Position wieder ein und die Gelenkzapfen sind wieder zentrisch.

Vorzugsweise ändert sich die Ausrichtung der Längsachse des Gelenkzapfens gegenüber der Längsachse der ihn aufnehmenden Büchse erst bei einem zwischen den mit dem Kreuzgelenk verbundenen Wellen wirkenden Drehmoment, welches 10Nm übersteigt.

Die Radiallager des Kreuzgelenks gemäß der Erfindung sind vorzugsweise in Form von Nadellagern mit Nadeln als Wälzkörper ausgebildet.

Die Erfindung bezieht sich weiters auf eine Lenksäule für ein Kraftfahrzeug mit einer Lenkwelle, die mindestens zwei Wellenteile umfasst, welche durch ein Kreuzgelenk gelenkig miteinander verbunden sind, wobei mindestens eines der Kreuzgelenke, welches zwei Wellenteile verbindet, in der genannten erfindungsgemäßen Weise ausgebildet ist. Insbesondere handelt es sich um eine Lenksäule, bei der ein, beispielsweise elektrischer, Hilfsantrieb vorgesehen ist, von dem ein Drehmoment auf die Lenkwelle ausübbar ist, welches über das mindestens eine in der erfindungsgemäßen Weise ausgebildete Kreuzgelenk übertragen wird. Das maximale vom Hilfsantrieb ausübbare Drehmoment kann beispielsweise mindestens 80 Nm, vorzugsweise mindestens 100 Nm betragen.

Weitere Vorteile und Einzelheiten der Erfindung werden im Folgenden anhand der beiliegenden Zeichnungen erläutert. In dieser zeigen:
- Fig. 1: einen schematischen Aufbau eines Lenksystems mit Hilfskraftunterstützung;
- Fig. 2: eine Schrägsicht eines Kreuzgelenks der Erfindung mit Endabschnitten der über das Kreuzgelenk verbundenen Wellen;
- Fig. 3: eine Schrägsicht einer Gelenkgabel und des Gelenkkreuzes, auf dessen Gelenkzapfen die Büchsen angeordnet sind;
- Fig. 4: eine Seitenansicht der Gelenkgabel mit dem Gelenkkreuz und den aufgesetzten Büchsen;
- Fig. 5: einen Schnitt entlang der Linie AA von Fig. 4;
- Fig. 6: einen vergrößerten Ausschnitt von Fig. 5;
- Fig. 7: einen Teilschnitt entlang der Linie BB von Fig. 4;
- Fig. 8: eine gegenüber Fig. 6 nochmals vergrößerte Darstellung mit verschwenktem Gelenkzapfen im Bereich der Laufbahnen des Gelenkzapfens und der Büchse, wobei der Schnitt dem von Fig. 6 entspricht;
- Fig. 9: einen Teilschnitt in einer Schnittebene analog den Figuren 5, 6 und 8 durch ein zweites Ausführungsbeispiel der Erfindung;
- Fig. 10: einen Schnitt analog Fig. 6 durch ein drittes Ausführungsbeispiel der Erfindung;
- Fig. 11: eine gegenüber Fig. 10 vergrößerte Darstellung mit verschwenktem Gelenkzapfen im Bereich der Laufbahnen des Gelenkzapfens und der Büchse;
- Fig. 12: eine schematische Darstellung von zwei Kugeln des Schrägkugellagers und einem Wälzkörper des Radiallagers zusammen mit dem Umriss der Laufbahn des Radiallagers in einer stirnseitigen Ansicht der Büchse in Kombination mit einer Seitenansicht von einem Teil der Wälzkörper des Schrägkugellagers und des Radiallagers;
- Fig. 13: eine schematische Darstellung eines Werkzeugs zur Einbringung der Kugeln bei der Montage;
- Fig. 14: eine schematische Darstellung eines Werkzeugs zur Einbringung der Wälzkörper des Radiallagers bei der Montage.

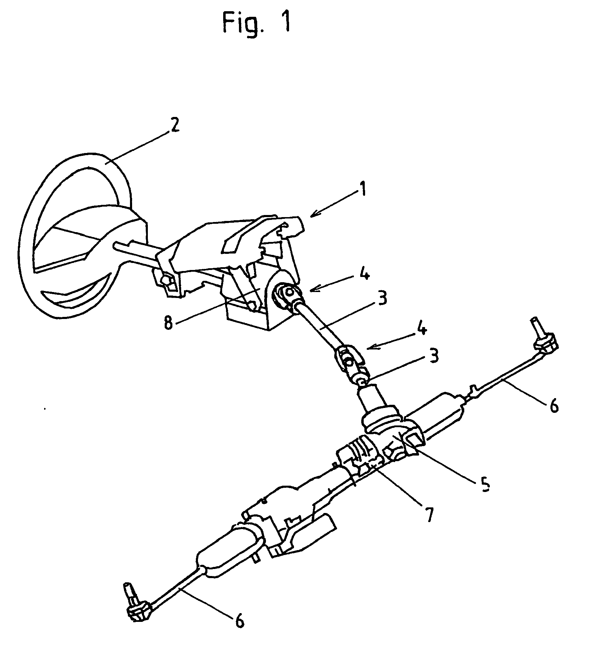

Die in Fig. 1 schematisch dargestellte Lenksäule 1 entspricht in ihrem prinzipiellen Aufbau dem Stand der Technik. Zur Übertragung der Lenkbewegung eines Lenkrades 2 dient eine Lenkwelle, welche zwei oder mehr Wellenteile 3 umfasst, zwischen denen jeweils ein Kreuzgelenk 4 angeordnet ist. Die Lenkwelle ist mit den Spurstangen 6 über ein Lenkgetriebe 5 verbunden, wobei die Spurstangen 6 durch eine Zahnstange 7 angetrieben werden.

Die Lenksäule umfasst weiters einen, beispielsweise elektrischen, Hilfsantrieb 8, von dem ein Drehmoment auf die Lenkwelle ausübbar ist, welches über die zwischen dem Hilfsantrieb 8 und dem Lenkgetriebe 5 in der Lenkwelle angeordneten Kreuzgelenke 4 übertragen wird. Vom Hilfsantrieb 8 kann beispielsweise ein Drehmoment bis maximal 120 Nm ausgeübt werden.

Der Hilfsantrieb 8 kann in herkömmlicher Weise zur Aufbringung einer Lenkhilfskraft und/oder zur Drehzahlüberlagerung vorgesehen sein, wozu entsprechende Getriebe zwischen dem Hilfsantrieb 8 und der Lenkwelle dienen (nicht sichtbar in Fig. 1). Je nach Ausbildung und Anwendung kann ein, ebenfalls nicht dargestelltes, Steuergerät vorhanden sein, dem die Betätigung des Lenkrades 2 über eine Sensorik als Signal eingespeist wird. Im Steuergerät, eventuell mit Fahrdynamikrechner, kann daraus, gegebenenfalls unter zu Hilfenahme eines Sensorsignals des Hilfsantriebes des Lenksystems und/oder der Drehzahlüberlagerungseinrichtung und/oder weiterer, den Fahrzeugzustand beschreibenden Signale, das entsprechende Steuersignal, beispielsweise eine Steuerspannung, für den Hilfsantrieb bestimmt und an diesen ausgegeben werden.

Mindestens eines der die Wellenteile 3 verbindenden Kreuzgelenke 4 ist in erfindungsgemäßer Weise ausgebildet. Vorzugsweise sind zumindest alle der Kreuzgelenke 4, über die das vom Hilfsantrieb 8 ausgeübte Drehmoment übertragen wird, in erfindungsgemäßer Weise ausgebildet.

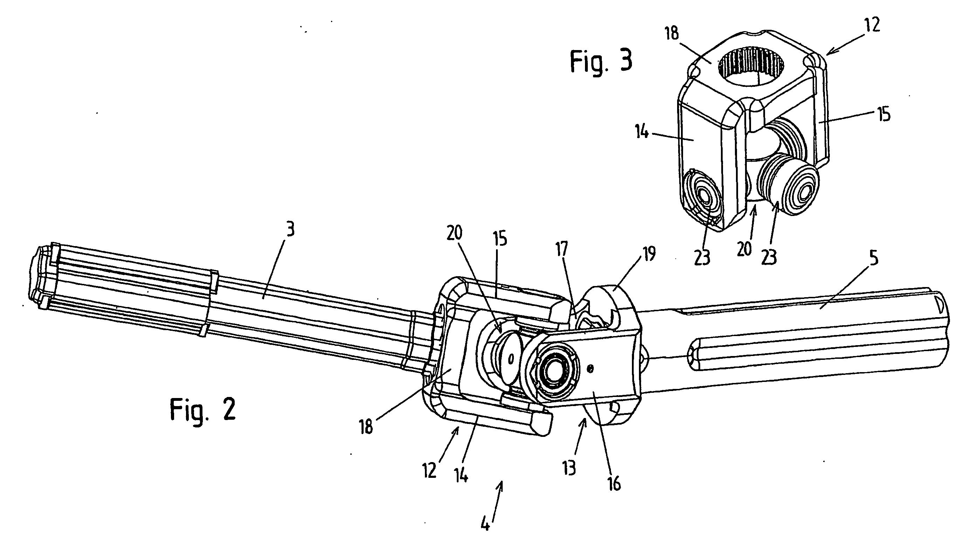

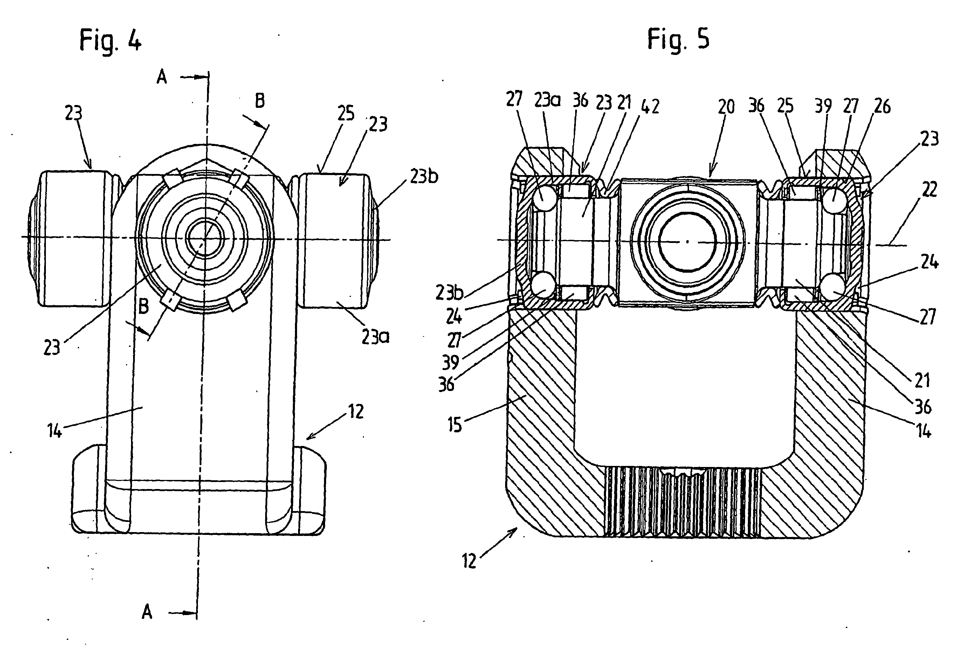

Ein erstes Ausführungsbeispiel eines in erfindungsgemäßer Weise ausgebildeten Kreuzgelenks wird im Folgenden anhand der Figuren 2 bis 8 beschrieben.

Das Kreuzgelenk 4 umfasst eine erste und eine zweite Gelenkgabel 12, 13. Die in Seitenansicht U-förmigen Gelenkgabeln 12, 13 weisen jeweils zwei Arme 14, 15 bzw. 16, 17 auf, welche von einem Basisteil 18, 19 der Gelenkgabel 12, 13 abstehen. Die Arme 14, 15 bzw. 16, 17 liegen in voneinander beabstandeten, vorzugsweise annähernd parallelen Ebenen (der Winkel, den die Ebenen miteinander einschließen beträgt weniger als 5°). Zur Verbindung der Gabeln 12, 13 dient ein Gelenkkreuz 20, welches um 90° zueinander versetzte Gelenkzapfen 21 aufweist. Von diesen sind jeweils die beiden um 180° zueinander versetzten Gelenkzapfen 21, deren Längsachsen 22 zusammenfallen, gegenüber einer der beiden Gelenkgabeln 12, 13 drehbar gelagert. Hierzu ragen die Gelenkzapfen 21 jeweils in eine Büchse 23, die in einer Durchtrittsöffnung 24 im jeweiligen Arm 14-17 festgelegt ist.

Die Büchsen 23 besitzen jeweils einen ihre Längsachse bzw. die Längsachse 22 des Gelenkzapfens 21 umgebenden und sich im Wesentlichen in axialer Richtung erstreckenden Mantel 23a und einen die Büchse (in Bezug auf die Richtung der Längsachse 22) verschließenden Boden 23b. Der Außendurchmesser der Büchse 23 kann z.B. 15mm +/- 3mm betragen.

Die Büchse 23 und die Durchtrittsöffnung 24 liegen koaxial zueinander. Ohne ein auf das Kreuzgelenk einwirkendes Drehmoment liegt der Gelenkzapfen 21 koaxial zur Büchse 23.

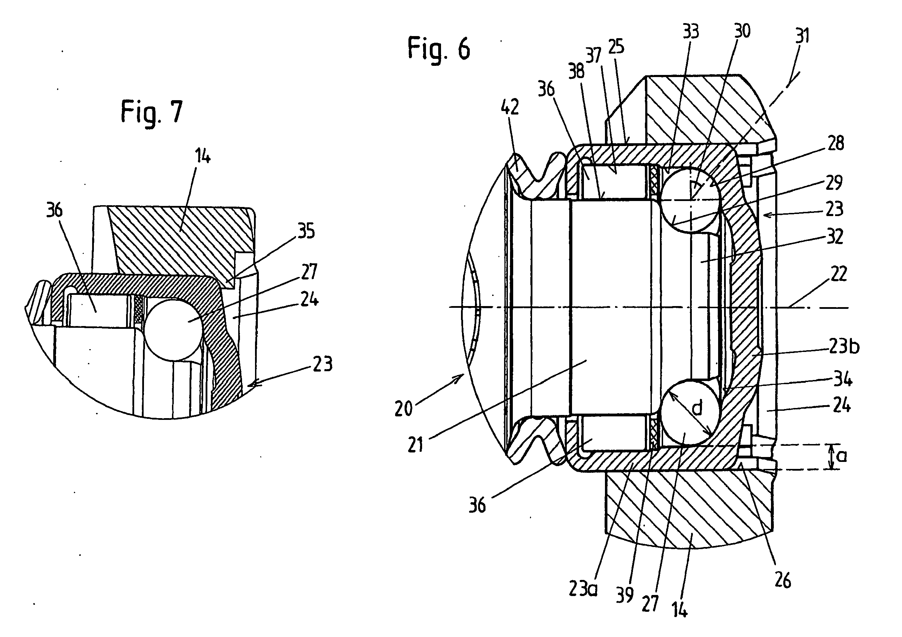

Die von der Längsachse 22 weggerichtete äußere Oberfläche 25 des Mantels 23a liegt an der Mantelfläche 26 der Durchtrittsöffnung 24 an. Durch die zumindest reibschlüssige Verbindung mit dem jeweiligen Arm 14-17 ist die Büchse 23 gegenüber dem Arm 14-17 unverdrehbar gehalten. Vorzugsweise ist weiters eine formschlüssige Verbindung der Büchse 23 gegenüber dem Arm 14-17 zumindest in axialer, vom Zentrum des Gelenkkreuzes 20 weggerichteten Richtung vorhanden. Diese wird hier durch vorspringende Nasen 35 (vgl. Fig. 7) gebildet, die durch eine Verstemmung ausgebildet werden.

Zur drehbaren Lagerung der Gelenkzapfen 21 gegenüber den Büchsen 23 sind jeweils ein Radiallager mit Wälzkörpern 36 und ein Schrägkugellager mit einem einzelnen Kugelkranz mit Kugeln 27 vorhanden.

Die Kugeln 27 des jeweiligen Schrägkugellagers rollen einerseits an einer an der Büchse 23 angeordneten ersten Laufbahn 28 andererseits an einer am Gelenkzapfen 21 angeordneten ersten Laufbahn 29 ab. Beispielsweise können pro Kugelkranz 10 bis 12 Kugeln 27 vorhanden sein. Die Kugeln 27 können beispielsweise Durchmesser im Bereich von 2, 5mm bis 3 mm aufweisen.

Die Schrägkugellager sind im Vollkreis mit Kugeln 27 gefüllt, d.h. es ist Kugel 27 an Kugel 27 angeordnet (vollkugelig).

Bei den mittels der Kugeln 27 gebildeten Schrägkugellagern sind die Wälzkörperkräfte in bekannter Weise in Richtung eines Druckwinkels 30 gerichtet, der im Längsmittelschnitt durch die Büchse 23 und den Gelenkzapfen 21 gesehen zwischen der durch die Anlagepunkte der Kugel 27 an den ersten Laufbahnen 28, 29 verlaufenden Geraden 31 und der Normalen auf die Längsachse 22 gemessen wird (vgl. Fig. 7). Der Druckwinkel 30 ist hierbei jedenfalls ungleich 0° und kleiner als 90°. Ein bevorzugter Bereich des Druckwinkels 30, wenn auf das Kreuzgelenk kein Drehmoment einwirkt, liegt von 35° bis 60°. Beispielsweise kann er etwa 45° betragen.

Die den Druckwinkel 30 definierenden Geraden 31 nähern sich zur Längsachse 22 hin dem Zentrum des Gelenkkreuzes 20 an. Ihr Schnittpunkt mit der Längsachse 22 liegt somit näher beim Zentrum des Gelenkkreuzes 20 als der axiale Bereich, in welchem sich das Schrägkugellager befindet.

Die ersten Laufbahnen 28, 29 bilden eine Schmiegung zu den Kugeln 27 aus. Hierzu weisen sie bezogen auf den Längsmittelschnitt durch die Büchse 23 und den Gelenkzapfen 21 gesehen Radien auf, die etwas größer als der Kugelradius sind. Beispielsweise kann die Schmiegung einer der beiden ersten Laufbahnen 28, 29, vorzugsweise die erste Laufbahn 28 an der Büchse 23, eine weitere Schmiegung als die andere erste Laufbahn 29, 28 aufweisen, um Toleranzen und die Verschiebung der Kugeln bei hohen Lasten (vgl. weiter unten) aufnehmen zu können.

So kann beispielsweise der Radius der ersten Laufbahn 28 an der Büchse 23 um weniger als 30%, vorzugsweise weniger als 20%, größer sein als der Radius der Kugeln 27. Um Toleranzen aufnehmen zu können, ist der Radius der ersten Laufbahn 28 an der Büchse 23 günstigerweise mehr als 5% größer als der Radius der Kugeln 27.

Beispielsweise kann der Radius der ersten Laufbahn 29 am Gelenkzapfen 21 um weniger als 20%, vorzugsweise weniger als 10%, größer sein als der Radius der Kugeln 27. Er ist hierbei günstigerweise um soviel größer als der Radius der Kugeln 27, dass der Lauf der Kugeln 27 sichergestellt wird, beispielsweise um mehr als 2,5% größer (Ausbildung einer "engsten Schmierung" mit optimaler Hertz'scher Pressung).

Die Gelenkzapfen 21 weisen jeweils einen in axialer Richtung des Gelenkzapfens 21 über den Bereich, in dem das Schrägkugellager angeordnet ist, vorstehenden Endabschnitt 32 auf, der das stirnseitige Ende des Gelenkzapfens 21 aufweist. Die erste Laufbahn 29 am Gelenkzapfen 21 ist somit im Bereich der von der Längsachse 22 weggerichteten Seitenfläche des Gelenkzapfens 21 angeordnet (und nicht etwa stirnseitig).

Durch diesen überstehenden Endabschnitt 32 (mit Einlauf-Konus) wird auch eine Montageerleichterung erreicht.

An seiner Stirnseite kann ein jeweiliger Gelenkzapfen 21 ein sogenanntes "Fließende" aufweisen, d. h. seine Form ist stirnseitig unregelmäßig, da dort die Form des durch Fließpressen, insbesondere Querfließpressen, hergestellten Gelenkzapfens offen ist.

Die erste Laufbahn 28 an der jeweiligen Büchse 23 verbindet die zur zentralen Längsachse 22 des Gelenkzapfens 21 gerichtete Innenfläche 33 des Mantels 23a der Büchse 23 mit der Innenfläche 34 des Bodens 23b der Büchse 23. Die Kugeln 27 liegen somit im Eckbereich der Büchse 23 zwischen dem Mantel 23a und dem Boden 23b.

Der Abstand a einer jeweiligen Kugel 27 von der Mantelfläche 26 der Durchtrittsöffnung 24 ist kleiner als der Durchmesser d der Kugel 27, vorzugsweise auch kleiner als der Radius der Kugel 27. Der Abstand a wird als Normalabstand zwischen der Umfangsfläche der Kugel 27 und der Mantelfläche 26 gemessen.

Ein jeweiliges Schrägkugellager ist als kombiniertes Radial- und Axiallager ausgebildet, von dem bis zu einem vorgegebenen Grenzwert des auf das Kreuzgelenk einwirkenden Drehmoments alle Lasten aufgenommen werden. Die Wälzkörper 36 des jeweiligen Radiallagers bleiben somit bis zu diesem Drehmoment lastfrei. Dieser Grenzwert kann beispielsweise mindestens 15 Nm, vorzugsweise mindestens 20 Nm betragen, beispielsweise 21 Nm.

Durch größere Dimensionierung der Konstruktion können die genannten Werte des Drehmoments erhöht werden.

Bei einer steigenden Last, also einem steigenden zwischen den beiden Wellenteilen 3, 5 ausgeübten Drehmoment, können sich die Kugeln 27 entlang der von den ersten Laufbahnen 28, 29 gebildeten Schmiegungen gegenüber der Nulllage (also ohne einwirkendes Drehmoment) etwas verschieben, wodurch die Längsachse 22 des Gelenkzapfens 21 von der Längsachse der Büchse 23 abzuweichen beginnt. Der Druckwinkel 30 ändert sich hierbei (vgl. weiter unten).

Auf die Kugeln 27 wirkt eine Vorspannung, die in axialer Richtung des Gelenkzapfens 21 zum Zentrum des Gelenkkreuzes 20 hin gerichtet ist oder zumindest eine solche Komponente aufweist. Im gezeigten Ausführungsbeispiel wird diese Vorspannung durch eine gegeneinander gerichtete Vorspannung der Arme 14, 15; 16, 17 einer jeweiligen Gelenkgabel 12, 13 ausgebildet wird. Hierzu werden die Arme 14, 15 bzw. 16, 17, die eine Federelastizität aufweisen, bei der Montage auseinandergebogen und die Büchsen 23 mit den Kugeln 27 auf Anschlag an die ersten Laufbahnen 29 eingepresst. Eine solche geringfügige Auseinanderbiegung bei der Montage, um eine axiale Vorspannung zwischen Büchse 23 und Gelenkzapfen 21 zu erreichen, ist bekannt.

Durch eine solche Vorspannung wird eine Spielfreiheit (bei geringem einwirkenden Drehmoment) erreicht und es beginnt die Abweichung zwischen der Längsachse 22 des Gelenkzapfens 21 und der Längsachse der ihn aufnehmenden Büchse 23 erst wenn durch das einwirkende Drehmoment die von der Vorspannung hervorgerufene, die jeweilige Kugel 27 ausrichtende Kraft überwunden wird.

Die Vorspannung zentriert die Gelenkzapfen 21 gegenüber den Büchsen 23.

Der auf die Längsachse 22 des Gelenkzapfens 21 bezogene axiale Bereich, in welchem die an der Büchse 23 angeordnete erste Laufbahn 28 liegt, befindet sich vorteilhafterweise wie dargestellt im axialen Bereich, über welchen die äußere Oberfläche 25 des Mantels 23a an der Mantelfläche 26 der Durchtrittsöffnung 24 anliegt (d.h. der axiale Bereich, über welchen sich die erste Laufbahn 28 erstreckt, liegt zwischen den Endpunkten des axialen Bereichs, über welchen sich die Anlage der äußeren Oberfläche 25 des Mantels 23a an der Mantelfläche 26 der Durchtrittsöffnung 24 erstreckt). Günstigerweise liegt in diesem axialen Bereich des Mantels 23a weiters zumindest ein Abschnitt der zweiten Laufbahn 37 bzw. des Wälzkörpers 36, wobei dieser Abschnitt vorzugsweise mindestens 25% der in Richtung der Längsachse 47 des Gelenkzapfens 21 gemessenen Länge des Wälzkörpers 36 beträgt.

Da der Mantel 23a der Büchse 23 im Wesentlichen zur Ausbildung des Sitzes dient und keine selbstständige tragende Funktion hat, kann dessen Wandstärke relativ klein bemessen sein, beispielsweise 1 mm oder weniger. Der Boden 23b der Büchse 23 hat im Gegensatz zu Ausbildungen im Stand der Technik keine federnde Funktion im Bezug auf die axiale Pressung der Kugeln 27. Die Federwirkung wird nur durch die Gabel 12, 13 und/oder ein separates Federelement, wie weiter unten beschrieben, erzielt.

Die Wälzkörper 36 des Radiallagers rollen bei Überschreiten des Grenzwertes des auf das Kreuzgelenk einwirkenden Drehmoments einerseits an einer an der Büchse 23 angeordneten zweiten Laufbahn 37, andererseits an einer am Gelenkzapfen 21 angeordneten zweiten Laufbahn 38 ab. Die zweite Laufbahn 37 an der jeweiligen Büchse 23 wird von einem Abschnitt der zur zentralen Längsachse 22 des Gelenkzapfens 21 gerichteten Innenfläche 33 des Mantels 23a der Büchse 23 gebildet. Die zweite Laufbahn 38 am Gelenkzapfen 21 ist an der von der Längsachse 22 weg gerichteten Seitenfläche des Gelenkzapfens 21 angeordnet.

Die die Wälzkörper 36 aufweisenden Radiallager sind in Form von Nadellagern mit Nadeln als Wälzkörper 36 ausgebildet.

In die vom Zentrum des Gelenkkreuzes 20 weg gerichtete Richtung sind die Wälzkörper 36 in diesem Ausführungsbeispiel von einem Anschlagring 39 axial geführt. Der Anschlagring ist mit dem Mantel 23a der Büchse 23 unverschiebbar verbunden, beispielsweise durch Einpressen. Auch eine Ausführung lose in der Büchse 23 ist denkbar und möglich.

In die zum Zentrum des Gelenkkreuzes 20 gerichtete Richtung sind die Wälzkörper 36 beispielsweise von einem in Richtung zur Längsachse 22 umgebogenen Endabschnitt des Mantels 23a der Büchse 23 geführt. Beispielsweise könnte auch ein separater Anschlagring, auch mit Dichtung, vorgesehen sein.

Wenn das einwirkende Drehmoment unterhalb des vorgegebenen Grenzwerts liegt, so sind die Wälzkörper 36 unbelastet, es liegt also ein Spiel zwischen den Wälzkörpern 36 und den zweiten Laufbahnen 37, 38 vor. Wenn das einwirkende Drehmoment den vorgegebenen Grenzwert übersteigt, so werden die die Wälzkörper 36 umfassenden Radiallager wirksam. Ab diesem Wert des Drehmoments werden die auftretenden Kräfte auch über diese Radiallager übertragen. Die ersten Laufbahnen 28, 29 für die Kugeln 27 werden nicht mehr höher belastet.

Die erste Laufbahn 28 und die zweite Laufbahn 37 einer jeweiligen Büchse 23 können mit dem gleichen Werkzeug hergestellt werden, wodurch eine hohe Genauigkeit erreichbar ist.

Zwischen dem umgebogenen Endabschnitt des Mantels 23a der Büchse 23 und dem Gelenkzapfen 21 ist eine Lippendichtung 42 aus einem elastischen Material angeordnet. Diese weist im gezeigten Ausführungsbeispiel eine V-förmige Ausbildung auf.

Weiters wirkt der umgebogene Rand des Mantels 23a gegenüber dem Gelenkzapfen 21 als Spaltdichtung.

Zur Montage des Kreuzgelenkes wird ein jeweiliger Gelenkzapfen 21 im Bereich der Durchtrittsöffnung 24 angeordnet. Die Büchse 23 mit den darin angeordneten Kugeln 27 und Wälzkörpern 36, die von einem eingebrachten Fett gehalten sind, wird axial zugeführt und in die Durchtrittsöffnung eingepresst, wobei der Gelenkzapfen 21 in die Büchse 23 eingeführt wird. Die Arme 14-17 einer jeweiligen Gelenkgabel 12, 13 werden beim Montagevorgang entsprechend aufgebogen, um die federelastische Vorspannung der Büchsen 23 gegen die am Gelenkkreuz 20 sich abstützenden Kugeln 27 zu erreichen. Die Arme 14-17 werden hierzu entsprechend abgestützt. Zur formschlüssigen Halterung der Büchsen 23 werden die die Präge-Nasen 35 bildenden Verstemmungen eingebracht.

Der Boden 23b der Büchse 23 kann vorzugsweise so dünn ausgebildet sein, dass er sich verformt, falls sich eine Kugel 27 oder ein Wälzkörper 36, die bzw. der bei der Montage herausgefallen ist, zwischen dem Boden 23b und dem Gelenkzapfen 21 verklemmt, um diese Verformung durch einen Messtaster im Stempel beim Einpressen zu erkennen und überwachen.

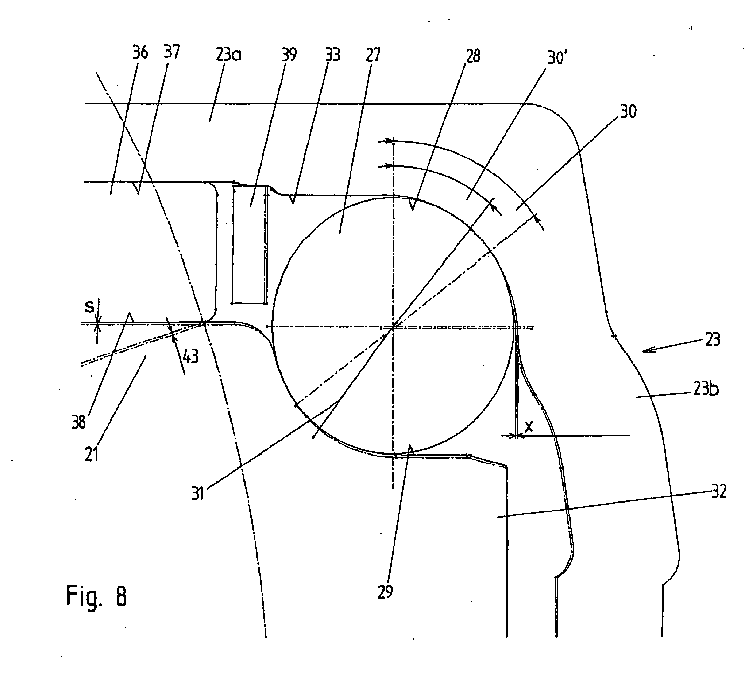

Während die Figuren 2 bis 7 den Zustand des Kreuzgelenkes ohne einwirkendes Drehmoment darstellen, zeigt Fig. 8 in durchgezogenen Linien den Zustand, der eingenommen wird, wenn aufgrund der Größe des einwirkenden Drehmoments das die Wälzkörper 36 aufweisende Radiallager wirksam wird. In Fig. 8 ist weiters zu Vergleichszwecken mit strichpunktierten Linien ein Teil der Wandung des Gelenkzapfens 21 und ein Teil der Innenwand der Büchse 23 für den Zustand ohne einwirkendes Drehmoment dargestellt (die strichpunktierte Darstellung der Innenwand der Büchse 23 für den unbelasteten Zustand ist über einen Teil der Laufbahn 28 der Übersichtlichkeit halber aber weggelassen).

Bei einem zunehmenden auf das Kreuzgelenk einwirkenden Drehmoment kommt es, wenn die auf die Kugeln 27 einwirkende Vorspannung überwunden wird, zu einer Auslenkung des Gelenkzapfens 21 gegenüber der Büchse 23, sodass die Längsachse 22 des Gelenkzapfens 21 gegenüber der Längsachse der Büchse 23 geringfügig verschwenkt wird. Hierbei verändern sich die Anlagepunkte der Kugeln 27 an den Laufbahnen 28, 29 und der Druckwinkel 30 ändert sich. Im Anlagezustand des Radiallagers (wenn das Spiel zwischen den Wälzkörpern 36 und den zweiten Laufbahnen 37, 38 aufgehoben ist) verringert sich der Druckwinkel 30' auf ein gegenüber dem Druckwinkel 30 im unbelasteten Zustand kleineren Wert. Vorzugsweise ist der Druckwinkel 30' um mindestens 5° kleiner als der Druckwinkel 30.

Durch die Verringerung des Druckwinkels 30 in Richtung zum Wert des Druckwinkels 30' im Anlagezustand bei steigender Last kommt es zu einer effektiveren Übertragung der radialen Kräfte, wodurch die Hertz'sche Pressung, welche auf die Laufbahnen 28, 29 und die Kugeln 27 einwirkt, unterproportional vergrößert wird.

Aus Fig. 8 ist die Veränderung der Lage des Gelenkzapfens 21 im Anlagezustand des Radiallagers im Vergleich zum unbelasteten Zustand ersichtlich. Weiters ist ersichtlich, dass im Anlagezustand des Radiallagers die Büchse 23 gegenüber dem unbelasteten Zustand um einen Weg x in die vom Zentrum des Gelenkkreuzes 20 weggerichtete axiale Richtung verschoben ist, und zwar aufgrund der Federelastizität der Arme 14-17. Mit der Veränderung der Lage der Gelenkzapfen 21 und der Lage der Büchse 23 ändern sich auch die Lagen der Kugeln 27 gegenüber den ersten Laufbahnen 28, 29 (diese Änderung ist nicht dargestellt in Fig. 8), und somit ihre Anlagestellen an den ersten Laufbahnen 28, 29. Auch der in Fig. 8 nicht dargestellte, rechts der Mittellinie liegende Abschnitt der Büchse 23 wird in die gleiche Richtung x verschoben (um einen anderen Weg).

Das Spiel s, welches zwischen den Wälzkörpern 36 und den zweiten Laufbahnen 37, 38 ohne ein auf das Kreuzgelenk einwirkendes Drehmoment einwirkt, beträgt vorzugsweise weniger als 0,3mm und kann beispielsweise im Bereich von 0,1 mm +/- 0,04mm liegen. Bis zum Wirksamwerden des Radiallagers übertragen somit nur die Kugeln 27 das Drehmoment.

In Fig. 8 ist weiters der Winkel 43 eingetragen, um den der Gelenkzapfen 21 gegenüber der Büchse 23 gedreht werden kann, bis das Radiallager zwischen dem Gelenkzapfen 21 und der Büchse 23 wirksam wird. Dieser Winkel beträgt vorzugsweise weniger als 0,5°.

Beim Ausführungsbeispiel von Fig. 8 wird die Laufbahn 28 der Büchse 23 von einer Fläche mit einem bezogen auf den Längsmittelschnitt einheitlichen durchgehenden Radius ausgebildet. An dem näher beim Zentrum des Gelenkkreuzes 20 gelegenen Ende der Laufbahn 28 kann sich eine Ausnehmung (Freistellung) befinden, die beispielsweise durch einen Einstich gebildet werden kann.

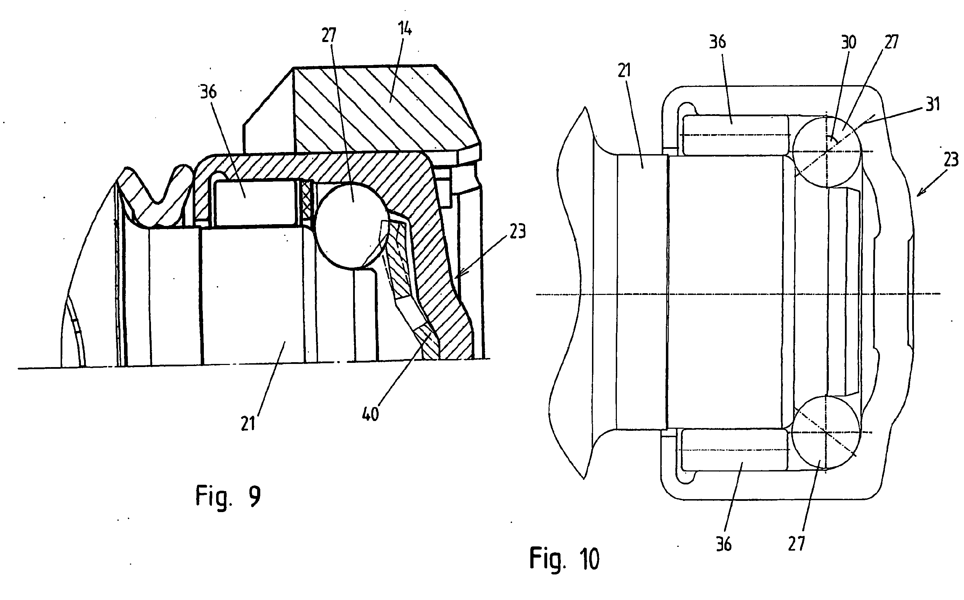

Bei dem in Fig. 9 dargestellten zweiten Ausführungsbeispiel ist im Unterschied zu dem zuvor beschriebenen Ausführungsbeispiel ein zusätzliches Federelement 40 vorhanden, welches sich einerseits am Boden 23b der Büchse 23 abstützt und andererseits die Kugeln 27 in axialer Richtung des Gelenkzapfens 21 in Richtung zum Zentrum des Gelenkkreuzes hin beaufschlagt (und dabei spielfrei drückt). Bei der Montage des Kreuzgelenktes wird das Federelement 40 und die Gabel 12, 13 vorgespannt. Der entspannte Zustand ist strichliert dargestellt. Die Federelastizität der Arme 14-17 wirkt dadurch abgefedert auf die Kugeln 27.

Das Federelement 40 liegt an den Kugeln 27 jeweils in der Nähe ihrer Pole (gedachten Drehachsen) an. Dadurch kann die Reibung gering gehalten werden.

Das Federelement 40 ist im gezeigten Ausführungsbeispiel als eine Art Tellerfeder ausgebildet. Das Federelement 40 ist hierbei als eine den Bereich der Längsachse 22 überdeckende Scheibe ausgebildet. Diese weist eine zentrale, beispielsweise kugelige Auflage auf. Das Federelement 40 kann hierbei lose in die Büchse 23 (im Fett) eingelegt sein. Es ist damit auch um die Längsachse 22 des Gelenkzapfens 21 bzw. der Büchse 23 drehbar und kann sich somit der Abroll-Drehgeschwindigkeit reibungsarm anpassen.

Das Federelement kann beispielsweise auch nach Art einer ringförmigen Tellerfeder ausgebildet sein.

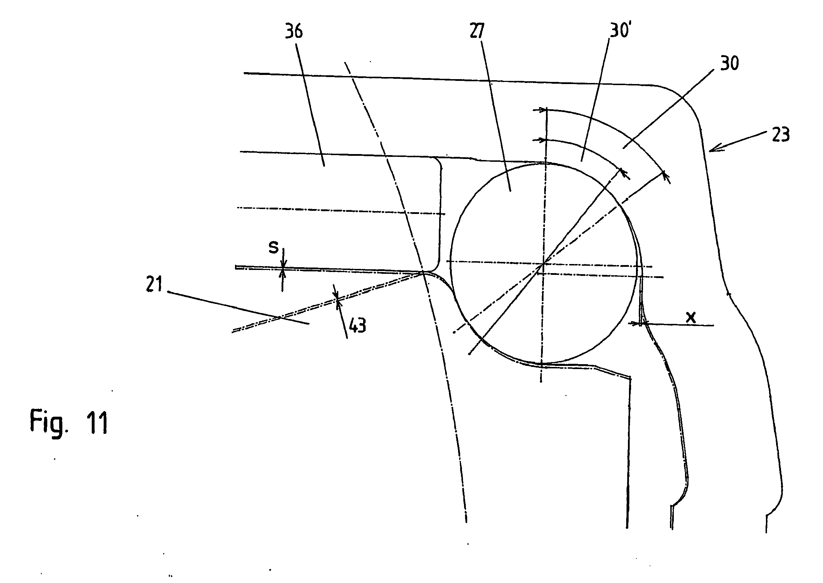

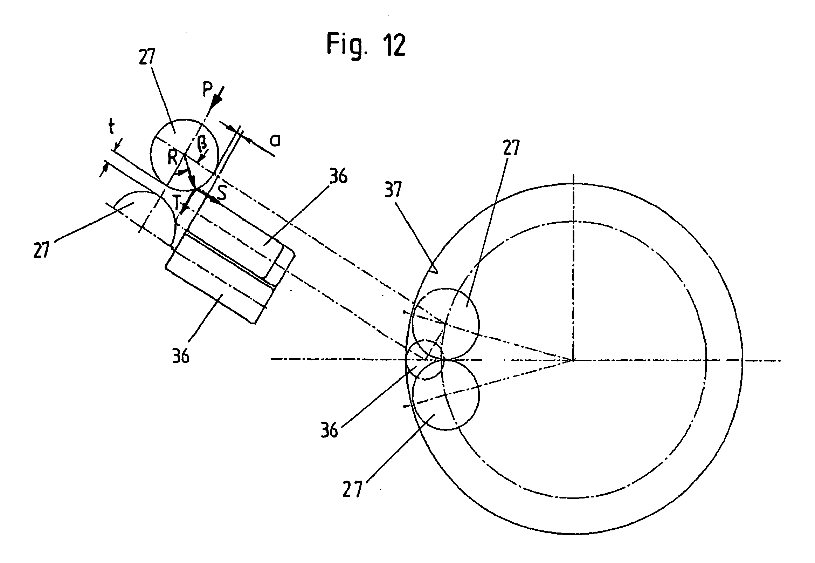

Ein weiteres Ausführungsbeispiel der Erfindung ist in den Fig. 10 bis 12 dargestellt. Der Unterschied zu dem in den Fig. 1 bis 8 dargestellten Ausführungsbeispiel besteht darin, dass hier ein Anschlagring 39 zwischen den Wälzkörpern 36 des Radiallagers und den Kugeln 27 des Schrägkugellagers entfällt. Wenn ein in Form einer Nadel ausgebildeter Wälzkörper 36 sich axial in Richtung zu den Kugeln 27 verschiebt, so wirken diese als Axialanschlag, wie dies in Fig. 12 dargestellt ist. Bei der links in Fig. 12 dargestellten Seitenansicht sind hierbei zwei benachbarte Kugeln 27 mit einem maximal möglichen Spiel t und in strichlierten Linien ein nadelförmiger Wälzkörper 36 dargestellt, der sich in den Bereich zwischen die beiden Kugeln 27 hineinverschoben hat. Die Kugel-Rollkraft ist mit P bezeichnet. Die von der Kugel auf den nadelförmigen Wälzkörper 36 ausgeübte Kraft ist mit R bezeichnet, die in axialer Richtung der nadelförmigen Wälzkörper 36 wirkende Kraftkomponente mit S und die in radialer Richtung wirkende Kraftkomponente mit T. Der Winkel zwischen der Axialrichtung des Wälzkörpers 36 und der Kraft R ist mit β bezeichnet. Jedenfalls solange β kleiner als 45° ist, kann die Kraftkomponente S den vorstehenden nadelförmigen Wälzkörper 36 wieder zurückschieben. Das Axialspiel der nadelförmigen Wälzkörper 36 ist mit u bezeichnet.

Die Wälzkörper 36 sind für Drehmomente von 0 bis zumindest 15Nm, vorzugsweise bis zumindest 20Nm, in beide Drehrichtungen lose.

Auch bei dieser Ausbildung könnte ein Federelement 40, wie im Zusammenhang mit Fig. 9 beschrieben, vorgesehen sein.

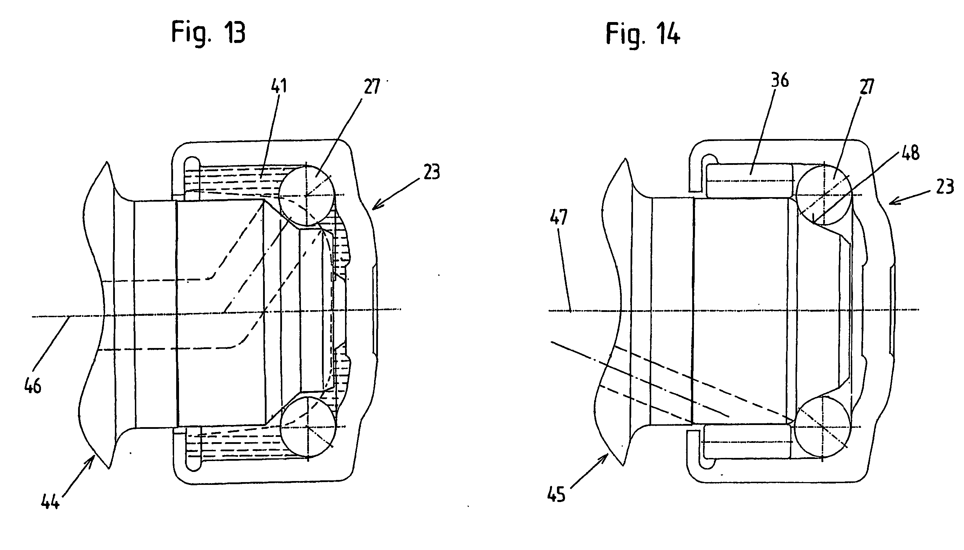

In den Fig. 13 und 14 sind schematisch Werkzeuge 44, 45 zum Einschießen der Kugeln 27 bzw. der Wälzkörper 36 bei der Montage dargestellt. Mit dem Werkzeug 44, welches einen sich um die Längsachse 46 drehenden Dorn aufweist, der einen inneren Kanal besitzt, durch welchen die Kugeln 27 zugeführt werden, können die Kugeln 27 eingeschossen werden. Die Kugeln 27 werden in Fett 41 eingebettet, welches zuvor in das Innere der Büchse 23 eingebracht worden ist.

Das Werkzeug 45 besitzt z.B. einen um die Längsachse 47 sich drehenden Dorn mit einem inneren Kanal, durch den die Wälzkörper 36 zugeführt werden. Hierbei besitzt der Dorn Andrückflächen 48, mit denen die Kugeln 27 an die erste Laufbahn 28 der Büchse 23 angedrückt werden. Die Andrückflächen 48 sind somit ähnlich den ersten Laufbahnen am Gelenkzapfen 21 ausgebildet.

Vorzugsweise besitzt der Mantel 23a der Büchse 23 in allen beschriebenen Ausführungsformen im Bereich, in welchem die erste Laufbahn 28 für die Kugeln 27 beginnt, eine nur wenig größere Wandstärke als im Bereich der zweiten Laufbahn 37 für die Wälzkörper 36. Vorzugsweise ist die Wandstärke des Mantels 23a hierbei im Bereich der zweiten Laufbahn 37 um höchstens 20% kleiner als im Bereich des Beginns der ersten Laufbahn 28. In den Ausführungsbeispielen ohne eingepressten Anschlagring 39 kann der Unterschied vorzugsweise weniger als 10% sein.

### Legende zu den Hinweisziffern:

- 1: Lenksäule
- 2: Lenkrad
- 3: Wellenteil
- 4: Kreuzgelenk
- 5: Lenkgetriebe
- 6: Spurstange
- 7: Zahnstange
- 8: Hilfsantrieb
- 12: 1. Gelenkgabel
- 13: 2. Gelenkgabel
- 14: Arm
- 15: Arm
- 16: Arm
- 17: Arm
- 18: Basisteil
- 19: Basisteil
- 20: Gelenkkreuz
- 21: Gelenkzapfen
- 22: Längsachse
- 23: Büchse
- 23a: Mantel
- 23b: Boden
- 24: Durchtrittsöffnung
- 25: äußere Oberfläche
- 26: Mantelfläche
- 27: Kugel
- 28: erste Laufbahn
- 29: erste Laufbahn
- 30, 30': Druckwinkel
- 31: Gerade
- 32: Endabschnitt
- 33: Innenfläche
- 34: Innenfläche
- 35: Präge-Nase
- 36: Wälzkörper
- 37: zweite Laufbahn
- 38: zweite Laufbahn
- 39: Anschlagring
- 40: Federelement
- 41: Fett
- 42: Dichtung
- 43: Winkel
- 44: Werkzeug
- 45: Werkzeug
- 46: Längsachse
- 47: Längsachse
- 48: Andrückfläche

## Patentansprüche

1. Kreuzgelenk, insbesondere für eine Lenksäule für ein Kraftfahrzeug, umfassend erste und zweite Gelenkgabeln (12, 13), welche jeweils zwei voneinander beabstandete Arme (14, 15; 16, 17) aufweisen, ein Gelenkkreuz (20) mit Gelenkzapfen (21), die gegenüber der jeweiligen Gelenkgabel (12, 13) drehbar gelagert sind, und Büchsen (23), die jeweils einen Mantel (23a) und einen die Büchse (23) in axialer Richtung verschließenden Boden (23b) aufweisen und in die jeweils einer der Gelenkzapfen (21) ragt und die jeweils in einer Durchtrittsöffnung (24) gehalten sind, die in einem der Arme (14, 15; 16, 17) einer der Gelenkgabeln (12, 13) angeordnet ist und von einer Mantelfläche (26) begrenzt ist, wobei die Lagerung der Gelenkzapfen (21) in den Büchsen (23) jeweils ein Schrägkugellager, dessen Kugeln (27) an einer an der Büchse (23) angeordneten ersten Laufbahn (28) und einer am Gelenkzapfen (21) angeordneten ersten Laufbahn (29) abrollen, und ein Radiallager umfasst, dessen Wälzkörpern (36) eine an der Büchse (23) angeordnete zweite Laufbahn (37) und eine am Gelenkzapfen (21) angeordnete zweite Laufbahn (38) zugeordnet sind, **dadurch gekennzeichnet, dass** der Abstand (a) einer jeweiligen Kugel (27) des Schrägkugellagers von der Mantelfläche (26) der Durchtrittsöffnung (24) kleiner als der Durchmesser (d) der Kugel (27) ist und dass die Kugeln (27) des Schrägkugellagers jeweils an einer ersten Laufbahn (28) der Büchse (23) abrollen, die eine zur zentralen Längsachse (22) des Gelenkzapfens (21) gerichtete Innenfläche (33) des Mantels (23a) mit einer zum Zentrum des Gelenkkreuzes (20) gerichteten Innenfläche (34) des Bodens (23b) verbindet.

2. Kreuzgelenk nach Anspruch 1, **dadurch gekennzeichnet, dass** die Kugeln (27) eines jeweiligen Schrägkugellagers jeweils an einer ersten Laufbahn (29) des Gelenkzapfens (21) abrollen, die an einer Seitenfläche des Gelenkzapfens (21) angeordnet ist, wobei die Gelenkzapfen (21) jeweils einen Endabschnitt (32) aufweisen, der in axialer Richtung des Gelenkzapfens (21) über den axialen Bereich vorsteht, in dem das Schrägkugellager angeordnet ist.

3. Kreuzgelenk nach Anspruch 1 oder 2, **dadurch gekennzeichnet, dass** der Abstand (a) einer jeweiligen Kugel (27) des Schrägkugellagers von der Mantelfläche (26) der Durchtrittsöffnung (24) kleiner als der Radius der Kugel (27) ist.

4. Kreuzgelenk nach einem der Ansprüche 1 bis 3, **dadurch gekennzeichnet, dass** die Kugeln (27) eines jeweiligen Schrägkugellagers gegen die am Gelenkzapfen (21) angeordnete erste Laufbahn (29) vorgespannt sind.

5. Kreuzgelenk nach Anspruch 4, **dadurch gekennzeichnet, dass** die Vorspannung der Kugeln (27) gegen die erste Laufbahn (29) des Gelenkzapfens (21) durch eine axiale Vorspannung der Büchse (23) in Richtung zum Zentrum des Gelenkkreuzes (20) erfolgt oder eine solche Vorspannung umfasst.

6. Kreuzgelenk nach Anspruch 4 oder 5, **dadurch gekennzeichnet, dass** jedem Schrägkugellager mindestens ein, die Kugeln (27) des Schrägkugellagers in axialer Richtung des Gelenkzapfens (21) zum Zentrum des Gelenkkreuzes (20) hin beaufschlagendes Federelement (40) zugeordnet ist, welches sich am Boden (23b) der Büchse (23) abstützt.

7. Kreuzgelenk nach einem der Ansprüche 1 bis 6, **dadurch gekennzeichnet, dass** der Druckwinkel (30) eines jeweiligen Schrägkugellagers ohne ein auf das Kreuzgelenk einwirkendes Drehmoment im Bereich zwischen 35° und 60° liegt.

8. Kreuzgelenk nach einem der Ansprüche 1 bis 7, **dadurch gekennzeichnet, dass** die, die Druckwinkel (30) definierenden Geraden (31) sich zur zentralen Längsachse (22) des Gelenkzapfens (21) hin dem Zentrum des Gelenkkreuzes (20) annähern.

9. Kreuzgelenk nach einem der Ansprüche 1 bis 8, **dadurch gekennzeichnet, dass** in einem Längsmittelschnitt durch den Gelenkzapfen (21) gesehen, der Radius der an der Büchse (23) angeordneten ersten Laufbahn (28) für die Kugeln (27) des Schrägkugellagers um weniger als 30% größer als der Radius der Kugeln (27) ist.

10. Kreuzgelenk nach einem der Ansprüche 1 bis 9, **dadurch gekennzeichnet, dass** in einem Längsmittelschnitt durch den Gelenkzapfen (21) gesehen, der Radius der am Gelenkzapfen (21) angeordneten ersten Laufbahn (29) für die Kugeln (27) des Schrägkugellagers um weniger als 20% größer als der Radius der Kugeln (27) ist.

11. Kreuzgelenk nach einem der Ansprüche 1 bis 10, **dadurch gekennzeichnet, dass** die an der Büchse (23) angeordnete erste Laufbahn (28) für die Kugeln (27) eines jeweiligen Schrägkugellagers im axialen Bereich liegt, in dem die Büchse (23) mit einer äußeren Oberfläche (25) an der Mantelfläche (26) der Durchtrittsöffnung (24) anliegt.

12. Kreuzgelenk nach einem der Ansprüche 1 bis 11, **dadurch gekennzeichnet, dass** unterhalb eines Grenzwertes des auf das Kreuzgelenk einwirkenden Drehmoments nur die Schrägkugellager wirksam sind und die Wälzkörper (36) der Radiallager unbelastet sind.

13. Kreuzgelenk nach einem der Ansprüche 1 bis 12, **dadurch gekennzeichnet, dass** zwischen den Kugeln (27) des Schrägkugellagers und den Wälzkörpern (36) des Radiallagers ein Anschlagring (39) an der Büchse (23) angeordnet ist, der einen Axialanschlag für die Wälzkörper (36) bildet.

14. Kreuzgelenk nach einem der Ansprüche 1 bis 13, **dadurch gekennzeichnet, dass** die Kugeln (27) des Schrägkugellagers einen Axialanschlag für die Wälzkörper (36) des Radiallagers bilden.

15. Lenksäule für ein Kraftfahrzeug mit einer Lenkwelle, die mindestens zwei Wellenteile (3) umfasst, welche durch ein Kreuzgelenk (4) gelenkig verbunden sind, **dadurch gekennzeichnet, dass** mindestens ein zwei Wellenteile (3) verbindendes Kreuzgelenk (4) nach einem der Ansprüche 1 bis 14 ausgebildet ist, wobei die Lenksäule vorzugsweise einen Hilfsantrieb (8) aufweist, von dem ein über das mindestens eine Kreuzgelenk (4) übertragenes Drehmoment auf die Lenkwelle ausübbar ist.

## Claims

1. A universal joint, in particular for a steering column for a motor vehicle, comprising first and second joint yokes (12, 13), each with two arms (14, 15; 16, 17) spaced apart from one another, a spider (20), with joint pins (21) rotatably mounted with respect to the respective joint yoke (12, 13), and bushes (23) which each have a casing (23a) and a base (23b) closing the bush (23) in an axial direction and into which in each case one of the joint pins (21) projects and which are in each case held in a through opening (24) which is arranged in one of the arms (14, 15; 16, 17) of one of the joint yokes (12, 13) and is bounded by a shell (26), wherein the mounting of the joint pins (21) in the bushes (23) in each case comprises an angular ball bearing, whose balls (27) roll on a first race (28) arranged on the bush (23) and on a first race (29) arranged on the joint pin (21), and a radial bearing whose rolling elements (36) are associated with a second race (37) arranged on the bush (23) and a second race (38) arranged on the hinge pin (21), **characterised in that** the distance (a) of a respective ball (27) of the angular ball bearing from the shell (26) of the through opening (24) is smaller than the diameter (d) of the ball (27) and **in that** the balls (27) of the angular ball bearing each roll on a first race (28) of the bush (23), this race (28) connecting an inner surface (33), directed towards the central longitudinal axis (22) of the joint pin (21), of the casing (23a) to an inner surface (34), directed towards the centre of the spider (20), of the base (23b).

2. A universal joint according to claim 1, **characterised in that** the balls (27) of a respective angular ball bearing roll in each case on a first race (29), arranged on a lateral surface of the hinge pin (21), of the hinge pin (21), wherein the hinge pins (21) each have an end portion (32) which in an axial direction of the hinge pin (21) projects beyond the axial region in which the angular ball bearing is arranged.

3. A universal joint according to claim 1 or 2, **characterised in that** the distance (a) of a respective ball (27) of the angular ball bearing from the shell (26) of the through opening (24) is smaller than the radius of the ball (27).

4. A universal joint according to any one of claims 1 to 3, **characterised in that** the balls (27) of a respective angular ball bearing are pre-tensioned against the first race (29) arranged on the hinge pin (21).

5. A universal joint according to claim 4, **characterised in that** the pre-tensioning of the balls (27) against the first race (29) of the hinge pin (21) takes place through axial pre-tensioning of the bush (23) in the direction of the centre of the spider (20) or comprises a pre-tensioning of that type.

6. A universal joint according to claim 4 or 5, **characterised in that** each angular ball bearing has associated therewith at least one spring element (40) acting upon the balls (27) of the angular ball bearing in an axial direction of the hinge pin (21) towards the centre of the spider (20), which spring element is supported on the base (23b) of the bush (23).

7. A universal joint according to any one of claims 1 to 6, **characterised in that** the pressure angle (30) of a respective angular ball bearing without torque acting upon the universal joint lies in the range between 35° and 60°.

8. A universal joint according to any one of claims 1 to 7, **characterised in that** the straight lines (31) defining the pressure angles (30) approach the centre of the spider (20) towards the central longitudinal axis (22) of the joint pin (21).

9. A universal joint according to any one of claims 1 to 8, **characterised in that** viewed in a longitudinal central section through the hinge pin (21), the radius of the first race (28), for the balls (27) of the angular ball bearing, arranged on the bush (23) is greater than the radius of the balls (27) by less than 30%.

10. A universal joint according to any one of claims 1 to 9, **characterised in that** viewed in a longitudinal central section through the hinge pin (21), the radius of the first race (29), for the balls (27) of the angular ball bearing, arranged on the hinge pin (21) is greater than the radius of the balls (27) by less than 20%.

11. A universal joint according to any one of claims 1 to 10, **characterised in that** the first race (28), for the balls (27) of a respective angular ball bearing, arranged on the bush (23) lies in the axial region in which the bush (23) contacts the shell (26) of the through opening (24) by means of an outer surface (25).

12. A universal joint according to any one of claims 1 to 11, **characterised in that** below a threshold value of the torque acting upon the universal joint only the angular ball bearings are active and the rolling elements (36) of the radial bearings are unloaded.

13. A universal joint according to any one of claims 1 to 12, **characterised in that** between the balls (27) of the angular ball bearing and the rolling elements (36) of the radial bearing there is a stop ring (39) arranged on the bush (23), which stop ring forms an axial stop for the rolling elements (36).

14. A universal joint according to any one of claims 1 to 13, **characterised in that** the balls (27) of the angular ball bearing form an axial stop for the rolling elements (36) of the radial bearing.

15. A steering column for a motor vehicle, having a steering shaft comprising at least two shaft parts (3) which are connected in an articulated manner by a universal joint (4), **characterised in that** at least one universal joint (4), connecting two shaft parts (3), is constructed according to any one of claims 1 to 14, wherein the steering column preferably has an auxiliary drive (8) by which a torque transmitted via the at least one universal joint (4) can be exerted on the steering shaft.

## Revendications

1. Joint de cardan, en particulier pour une colonne de direction pour un véhicule automobile, comprenant une première et une deuxième fourches d'articulation (12, 13), qui présentent respectivement deux bras espacés l'un de l'autre (14, 15; 16, 17), un croisillon (20) avec des pivots (21), qui sont disposés de façon rotative par rapport aux fourches d'articulation respectives (12, 13), et des douilles (23), qui présentent chacune une enveloppe (23a) et un fond (23b) fermant la douille (23) en direction axiale et dans lesquelles pénètre respectivement un des pivots (21) et qui sont maintenues respectivement dans une ouverture traversante (24), qui est disposée dans un des bras (14, 15; 16, 17) d'une des fourches d'articulation (12, 13) et qui est limitée par une surface d'enveloppe (26), dans lequel le support des pivots (21) dans les douilles (23) comprend respectivement un roulement à billes oblique, dont les billes (27) roulent sur une première piste de roulement (28) disposée sur la douille (23) et sur une première piste de roulement (29) disposée sur le pivot (21), et un palier radial, dont les corps de roulement (36) sont associés à une deuxième piste de roulement (37) disposée sur la douille (23) et à une deuxième piste de roulement (38) disposée sur le pivot (21), **caractérisé en ce que** la distance (a) d'une bille respective (27) du roulement à billes oblique à la surface d'enveloppe (26) de l'ouverture traversante (24) est plus petite que le diamètre (d) de la bille (27) et **en ce que** les billes (27) du roulement à billes oblique roulent respectivement sur une première piste de roulement (28) de la douille (23), qui relie une surface intérieure (33) de l'enveloppe (23a) orientée vers l'axe longitudinal central (22) du pivot (21) à une surface intérieure (34) du fond (23b) orientée vers le centre du croisillon (20).

2. Joint de cardan selon la revendication 1, **caractérisé en ce que** les billes (27) d'un roulement à billes oblique respectif roulent respectivement sur une première piste de roulement (29) du pivot (21), qui est disposée sur une surface latérale du pivot (21), dans lequel les pivots (21) présentent respectivement une partie d'extrémité (32), qui est saillante dans la direction axiale du pivot (21), au-delà de la région axiale dans laquelle le roulement à billes oblique est disposé.

3. Joint de cardan selon la revendication 1 ou 2, **caractérisé en ce que** la distance (a) d'une bille respective (27) du roulement à billes oblique à la surface d'enveloppe (26) de l'ouverture traversante (24) est plus petite que le rayon de la bille (27).

4. Joint de cardan selon l'une quelconque des revendications 1 à 3, **caractérisé en ce que** les billes (27) d'un roulement à billes oblique respectif sont précontraintes contre la première piste de roulement (29) disposée sur le pivot (21).

5. Joint de cardan selon la revendication 4, **caractérisé en ce que** la précontrainte des billes (27) contre la première piste de roulement (29) du pivot (21) est effectuée par une précontrainte axiale de la douille (23) en direction du centre du croisillon (20) ou présente une telle précontrainte.

6. Joint de cardan selon la revendication 4 ou 5, **caractérisé en ce qu'**à chaque roulement à billes oblique est associé au moins un élément de ressort (40) poussant les billes (27) du roulement à billes oblique en direction axiale du pivot (21) vers le centre du croisillon (20), et qui prend appui sur le fond (23b) de la douille (23).

7. Joint de cardan selon l'une quelconque des revendications 1 à 6, **caractérisé en ce que** l'angle de pression (30) d'un roulement à billes oblique respectif sans qu'un couple de rotation agisse sur le croisillon se situe dans la plage comprise entre 35° et 60°.

8. Joint de cardan selon l'une quelconque des revendications 1 à 7, **caractérisé en ce que** les droites (31) définissant les angles de pression (30) s'approchent du centre du croisillon (20) en direction de l'axe longitudinal central (22) du pivot (21).

9. Joint de cardan selon l'une quelconque des revendications 1 à 8, **caractérisé en ce que**, vu dans une coupe longitudinale centrale à travers le pivot (21), le rayon de la première piste de roulement (28) disposée sur la douille (23) pour les billes (27) du roulement à billes oblique est plus grand de moins de 30 % que le rayon des billes (27).

10. Joint de cardan selon l'une quelconque des revendications 1 à 9, **caractérisé en ce que**, vu dans une coupe centrale longitudinale à travers le pivot (21), le rayon de la première piste de roulement (29) disposée sur le pivot (21) pour les billes (27) du roulement à billes oblique est plus grand de moins de 20 % que le rayon des billes (27).

11. Joint de cardan selon l'une quelconque des revendications 1 à 10, **caractérisé en ce que** la première piste de roulement (28) disposée sur la douille (23) pour les billes (27) d'un roulement à billes oblique respectif est située dans la région axiale, dans laquelle la douille (23) repose par une surface extérieure (25) sur la surface d'enveloppe (26) de l'ouverture traversante (24).

12. Joint de cardan selon l'une quelconque des revendications 1 à 11, **caractérisé en ce que**, en dessous d'une valeur limite du couple de rotation agissant sur le croisillon, seuls les roulements à billes obliques sont actifs et les corps de roulement (36) des paliers radiaux ne sont pas chargés.

13. Joint de cardan selon l'une quelconque des revendications 1 à 12, **caractérisé en ce qu'**un anneau de butée (39), qui forme une butée axiale pour les corps de roulement (36), est disposé sur la douille (23) entre les billes (27) du roulement à billes oblique et les corps de roulement (36) du palier radial.

14. Joint de cardan selon l'une quelconque des revendications 1 à 13, **caractérisé en ce que** les billes (27) du roulement à billes oblique forment une butée axiale pour les corps de roulement (36) du palier radial.

15. Colonne de direction pour un véhicule automobile avec un arbre de direction, qui comprend au moins deux parties d'arbre (3), qui sont reliées de façon articulée par un joint de cardan (4), **caractérisée en ce qu'**au moins un joint de cardan (4) reliant deux parties d'arbre (3) est réalisé selon l'une quelconque des revendications 1 à 14, dans laquelle la colonne de direction présente de préférence un entraînement auxiliaire (8), par lequel un couple de rotation transmis par ledit au moins un joint de cardan (4) peut être exercé sur l'arbre de direction.
